# EUROPEAN PATENT APPLICATION

(11) **EP 2 113 356 A1**
(43) Date of publication of application: **04.11.2009**
(21) Application number: 09005868.6
(22) Date of filing: 28.04.2009
(51) Int. Cl.: B29B 17/00

(54) **Process for closing orifices and/or protecting structures by reusing end-of-life tyres**

(30) Priority: 29.04.2008 ES 200801229
(71) Applicant: Tool Ulee, S.L., 28034 Madrid (ES)
(72) Inventor: Martinez Alvaro, Oscar, 28034 Madrid (ES); Herrero del Barrio, Pablo, 28034 Madrid (ES)
(74) Representative: PROPI, S.L.

(57) **Abstract**

Process for closing orifices and/or protecting structures by reusing end-of-life tyres, which reduces environmental impact by not recycling through crushing, but rather through direct reuse. The tyre treads (1) are cut, separated from the flanks (2) and flatly disposed, for the ultimate purpose of disposing these on the orifice or surface to be protected. The treads (1) are mechanically joined by means of mechanical elements (3) and the structure created may be linear, two-dimensional or three-dimensional.

## Description

Process for closing orifices and/or protecting structures by reusing end-of-life tyres.

### OBJECT OF THE INVENTION

The present invention has the object of providing a recycling method based on the reuse of end-of-life tyres, which reduces environmental impact by not recycling through crushing, but rather through direct reuse. It involves a process for closing orifices and/or protecting structures, wherein the tyre treads are cut, separated from the flanks and flatly disposed in one or several layers, continuous or discontinuous, and then disposed on the orifice or surface to be protected.

### BACKGROUND OF THE INVENTION

At present, the massive manufacturing of tyres and the difficulties in disposing of these once used is one of the environmental problems faced by all countries. Throughout the world there are hundreds of thousands of tons of used tyres annually and the production of new tyres is on the rise. Until now, for convenience and due to lack of clear legislation in this regard, the main destination of used tyres was the rubbish dump, whether controlled or uncontrolled.

Tyre recycling consists of removing the steel and fibres from the tyre and then crushing it. The resulting paste is used for different purposes, as an asphalt improver, a noise and vibration mitigation element, door stops, bumpers, beacons, soles for footwear, etc.

Direct reuse is the most efficient environmental alternative from all viewpoints, but it is a very small minority. Until now, only a few solutions have been found for tyre reuse, of scarce importance and very little relevance. For example, the technology surveillance report presented in February 2008 by the Government of Madrid region on the valuation of end-of-life tyre reveals that tyre reuse is focused on the construction of artificial reefs, concrete-coated tyre bales and provisional lanes or reinforced surface structures based on overlapping layers of whole tyres filled with compacted granular material.

In terms of patents, ES 2151886 stands out, relating to a construction material, material blocks and manufacturing process, used to build roads, parking areas and streets, and preformed blocks for buildings and similar. Said material is composed of 25 to 55% by volume of asphalt, 10 to 40% by volume of polyethylene, 5 to 35% by volume of monofilament fibre material and 5 to 35% by volume of elastomeric material. Patent ES 2222504 also describes an surface structure, which includes a subsurface with a specific surface area, a lower layer of a sound-absorbing substrate made of a resilient material and an upper surface disposed on top and adhered to the lower layer, where the cavities provided in the lower surface of the substrate consist of U or V-shaped cross-sectional grooves which are parallel to each other and extend at an angle to the side edges of the substrates; and the resilient material is made of recycled rubber. Patent ES 2257928 relates to an acoustic insulation sheet wherein the absorbent material is made of crushed rubber from recycled tyres mixed with a binder commercially called EVA or POLYURETHANE, in a proportion which in the preferred embodiment contains 80% of base material and 20% of binder.

The three foregoing patents relate to the formation of different structures for the manufacture of roads, surfaces, buildings and even as acoustic insulation, and also contain the process for obtaining these, through a combination of end-of-life tyres in different proportions and elastomers. In the present invention, said tyres are recycled directly, in such a manner that the tyre is not recycled and then treated prior to use thereof, but is rather used directly, separating the tread from the flanks. Additionally, in the invention that is the object of study said tyre is used for different applications for which it had never been used before. The different layers of material are joined mechanically, thereby avoiding the use of glues.

The present invention differentiates itself from the state-of-the-art both in the form of the modular system and in the assembly process thereof, and in the applications for which it is intended.

As opposed to the current crushing-based tyre recycling trend, this invention is based on recycling through reuse, an energetically more efficient, cheaper and simpler process.

Another important difference is the non-use of additional reinforcement, since the internal frame of the very tyre provides with enough resistance. This reinforcement is necessary in other cases, such as in guard-rails made out of granulate of recycled tyres. Additionally, in this system the treads are not joined together by means of gluing, but rather mechanically.

### DESCRIPTION OF THE INVENTION

The present invention relates to a process for closing orifices or protecting natural or artificial structural surfaces, through a modular system that may have one prevailing dimension (forming a band), two (forming a sheet) or none (forming a three-dimensional solid). The joining of this modular system to another structure can be discontinuous or continuous.

In this manner, the object of the invention is double, as in addition to allowing closing or protection, it also allows the reuse of used tyres, thus reducing environmental impact.

The modular system is formed by mechanically joining end-of-life tyre treads, once these are cut, separated from the flanks and flatly disposed. The treads to be joined may or may not have the same dimensions and may be disposed continuously or discontinuously, leaving or not leaving orifices between adjacent treads.

The treads are joined together by means of mechanical elements, which may be screws, rivets, staples, cables, wires, tapes or similar elements made of plastic, metal, fabric or any other resistant material. The thickness of the modular system depends on the use to which it is destined, and may have one or several layers.

The modular system may be superficially treated to avoid damage from ultraviolet rays, chemical attacks or other agents that affect the tyre rubber or frames. Likewise, it may be treated for aesthetical purposes: painting, labeling, etc.

The surfaces or volumes obtained may be destined to closing the orifices of natural or artificial structures or to avoiding all types of superficial mechanical aggressions (impact, abrasion, erosion, cavitation, etc.).

The modular system may or may not be joined to the structure to be filled or protected. In case both are joined together, the type of union will depend on the structure. The whole structure or only the points of contact with the modular system may be protected by arranging tyre flanks, which is of particular interest when impacts are expected, such as in the case of road-side barriers.

### DESCRIPTION OF THE DRAWINGS

For the purpose of complementing this description and helping to better understand the characteristics of the invention, in accordance with a preferred example of practical embodiment thereof, a set of drawings has been included as an integral part of this description, wherein the following figures have been represented in an illustrative and non-limitative manner.

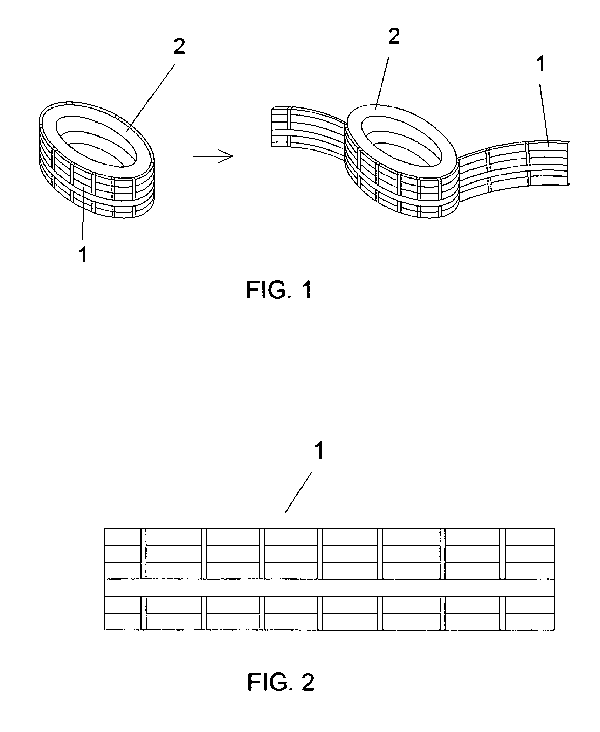

Fig. 1.- shows, on the left-hand side of the image, the tyre assembly, where we can observe the flank (2) surrounded by the tread (1) and, on the right, the separation of the tread (1) from the flank (2) after cutting;
Fig. 2.- shows, the tread (1) once completely separated from the flank and flatly disposed;
Fig. 3.- shows a possible arrangement of two different treads (1), for joining together by means of mechanical elements (3), forming a band;
Fig. 4.- shows another possible arrangement of two different treads (1), joined together by means of mechanical elements (3), forming a band;
Fig. 5.- shows a third possible arrangement of two different treads (1), joined together by means of mechanical elements, forming a band;
Fig. 6.- shows another possible arrangement of several different treads, forming a continuous surface;
Fig. 7.- shows an elevation view of a possible arrangement of treads;
Fig. 8.- shows a cross section of another possible arrangement of treads;
Fig. 9.- shows another possible arrangement of several different treads, forming a discontinuous surface; and
Fig. 10.- shows another possible arrangement of several treads, in such a manner as to form a three-dimensional solid.

### PREFERRED EMBODIMENT OF THE INVENTION

The present invention relates to a process for closing orifices and/or protecting structures by reusing end-of-life tyres comprised of the following stages:
(a)cutting the treads (1) from the end-of-life tyres,
(b)separating the flanks (2) and flatly disposing them,
(c)forming a solid by combining the treads (1) of different tyres, creating a structure according to need,
(d)disposing it on the orifice or surface to be protected.

The structure created is formed by mechanically joining the treads (1) of the end-of-life tyres. The treads to be joined may or may not have identical dimensions and may be disposed in a continuous manner, leaving or not leaving orifices between adjacent treads.

The treads are mechanically joined by means of mechanical elements (3) such as screws, rivets, staples, cables, wires or similar elements made of plastic, metal, fabric or any other resistant material. The thickness of the modular system depends on the use for which it is destined, in such a manner that a single layer, where the join between adjacent edges may be overlapping or lipped, or several layers may be created. Likewise, by combining said treads (1), we will obtain a linear, two-dimensional or three-dimensional structure, also according to need.

The modular system may be superficially treated to avoid damage from ultraviolet rays, chemical attacks or other agents that affect the tyre rubber or frames. Likewise, it can be treated for aesthetical purposes, such as painting, labelling, etc.

The modular system may or may not be adhered to the external structure or may simply overlap it. If we want to firmly join it together, the type of union will depend on the structure. For example, in the case of poles, the band or sheet can be made to pass around or surround these, closing a loop by means of a joining element such as clamps, fastening anchors, etc., or simply boring the structure and solidarising both with a mechanical element.

The structure assembly or only the points of contact with the modular system may be protected by disposing tyre flanks (2), thereby guaranteeing the absorption of possible impacts on this point of contact. This protection may be comprehensive, lining the structure, or only in one direction. This is particularly useful when high-energy impacts are expected, such as in the case of road-side barriers.

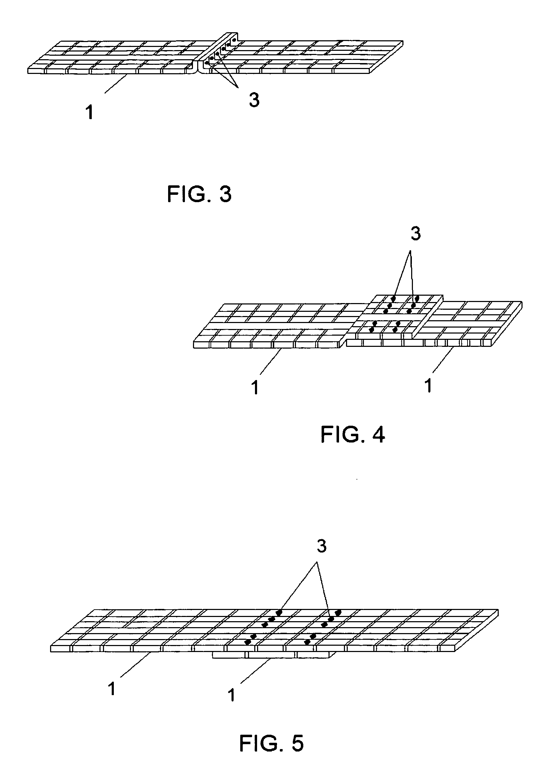

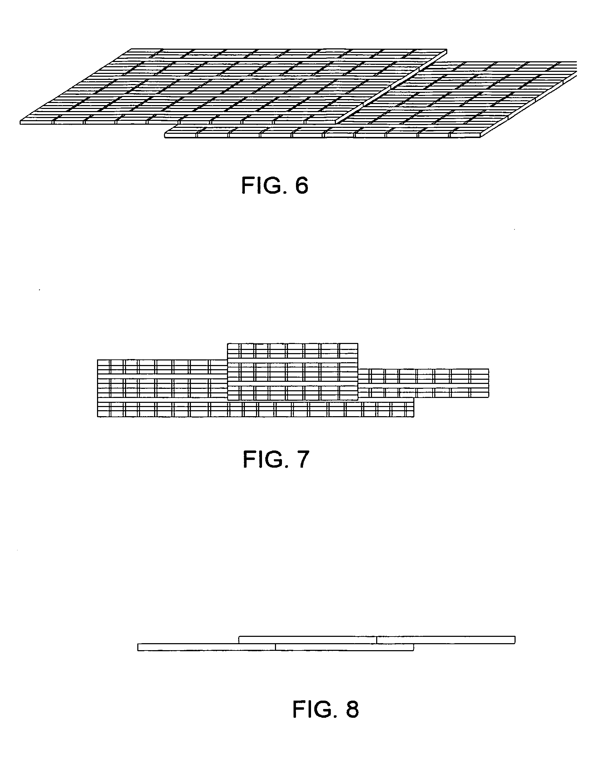

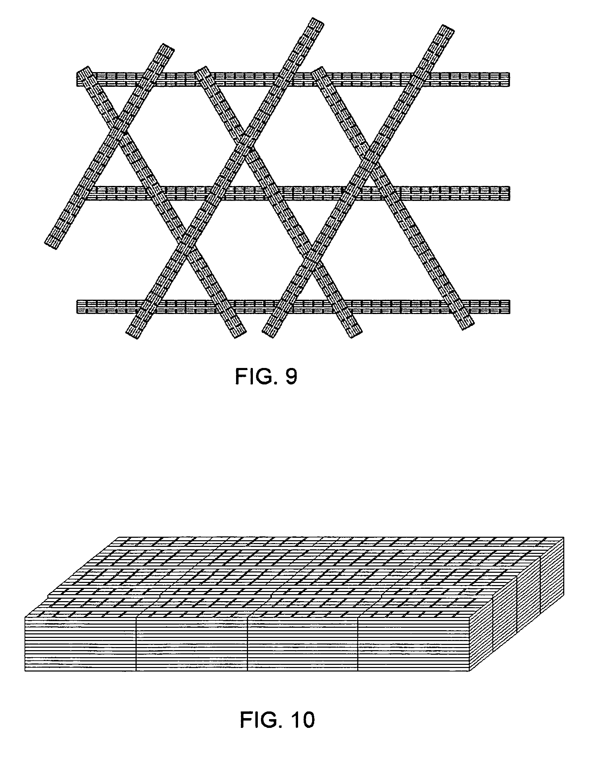

In figures 3 to 10, we can see different configurations adopted by the treads for different applications. The proposed system, for example, controls pure abrasion or friction wear in bridge piers, spillways and channels, pipes, forest roads and other structures that so require it. It also minimises erosion or impact abrasion, continued or occasional, in port docks, guard rails, road safety barriers, etc. Additionally, the cavitation-abrasion to spillways and channels can be palliated by this system.

Another important application of the system would be as an anti-contamination sheet when stockpiling aggregates (gravel or sand), or other contaminating substances on the ground.

As a lining, the application acoustically or thermally insulates the structure that it protects, such as industrial plants, air chambers in dwellings, roofs of buildings, ships, etc.

If the treads are adequately overlapped, the modular structure may be used as a roof, either leaned against the solid that we want to protect (aggregates, structures, etc.), or self-standing on supports at its ends or propped against cables or beams. It can also serve to waterproof the structure, as in the case of rubbish dumps, loose-material dams, concrete subject to frost or chemical actions, etc.

On being able to form a three-dimensional solid, its industrial application could be the construction of protections against wave action, embankment retainers, etc.

In the specific case of being disposed for the purpose of damping impacts, the tyre treads dissipate that kinetic energy, partly due to deformation and partly to transfer thereof to the structure to which it is joined. Specifically, the modular system may be disposed forming a continuous tape underneath metal road barriers for the purpose of retaining motorcyclists and cyclists in their trajectory after an accident, and preventing them from leaving the carriageway, in addition to minimising the impacts they suffer against the metal structure.

Additionally, given that its surface has a very low elasticity module, it can also be used to protect against low-energy impacts and in those cases where the damage to the body being impacted must be minimised, such as in children's parks, accesses to garages, etc.

## Claims

1. Process for closing orifices and/or protecting structures by reusing end-of-life tyres, **characterised in that** it comprises the following stages:
(a) cutting the treads (1) from the end-of-life tyres,
(b) separating the flanks (2) and flatly disposing them,
(c) forming a solid by combining the treads of different tyres, creating a structure according to need,
(d) disposing it on the orifice or surface to be protected.

2. Process for closing orifices and/or protecting structures by reusing end-of-life tyres, **characterised in that** the treads (1) are mechanically joined.

3. Process for closing orifices and/or protecting structures by reusing end-of-life tyres, according to the preceding claims, **characterised in that** the treads (1) are mechanically joined by means of mechanical elements (3).

4. Process for closing orifices and/or protecting structures by reusing end-of-life tyres, according to the preceding claims, **characterised in that** the structure created by combining the treads is linear.

5. Process for closing orifices and/or protecting structures by reusing end-of-life tyres, according to claims 1 to 3, **characterised in that** the structure created by combining the treads is two-dimensional.

6. Process for closing orifices and/or protecting structures by reusing end-of-life tyres, according to claims 1 to 3, **characterised in that** the structure created by combining the treads is three-dimensional.

7. Process for closing orifices and/or protecting structures by reusing end-of-life tyres, according to the preceding claims, **characterised in that** the treads (1) are superficially treated to avoid damage from ultraviolet rays, chemical attacks or other agents that affect the tyre rubber or frames.

8. Process for closing orifices and/or protecting structures by reusing end-of-life tyres, according to the preceding claims, **characterised in that** the treads (1) that are joined together have the same dimension.

9. Process for closing orifices and/or protecting structures by reusing end-of-life tyres, according to claims 1 to 7, **characterised in that** the treads (1) that are joined together have different dimensions.

10. Process for closing orifices and/or protecting structures by reusing end-of-life tyres, according to the preceding claims, **characterised in that** the structure assembly is protected by the tyre flanks (2), especially in impact-prone zones.

11. Process for closing orifices and/or protecting structures by reusing end-of-life tyres, according to the preceding claims, **characterised in that** the structure created by combining tyre treads (1), in accordance with stage (d) of claim 1, is disposed on the surface to be protected in overlapping position with as many layers as required.

12. Process for closing orifices and/or protecting structures by reusing end-of-life tyres, according to claims 1 to 10, **characterised in that** the structure created by combining tyre treads (1), in accordance with stage (d) of claim 1, is firmly adhered to the surface to be protected, with means that depend on the type of surface itself.
